# EUROPEAN PATENT SPECIFICATION

(11) **EP 0 824 987 B1**
(45) Date of publication and mention of the grant of the patent: **31.10.2001**
(21) Application number: 97202878.1
(22) Date of filing: 29.06.1994
(51) Int. Cl.: B23K 10/02

(54) **Plasma welding process**
Plasmaschneidverfahren
Procédé de soudage au plasma

(43) Date of publication of application: 25.02.1998
(62) Divisional of application: 94401477.8
(73) Proprietor: KABUSHIKI KAISHA KOBE SEIKO SHO also known as KOBE STEEL LTD., Hyogo-ken, 651 (JP)
(72) Inventor: Yoshino, Fumito, Fujisawa Plant. in KOBE STEEL LTD, Fujisawa-shi, Kanagawa-ken, 251 (JP)
(74) Representative: Keib, Gérard

(56) References cited:
- EP-A- 0 256 525
- FR-A- 1 555 904

## Description

The present invention relates generally to a plasma welding process. More specifically, the invention relates to a plasma welding process suitable for performing plasma welding for a welding portion of a plate having a thickness of greater than or equal to 6 mm with sequentially varying welding position, such as plasma welding for medium or large diameter stationary pipe, tank or ship and so forth.

A plasma welding is a welding method employing a high energy beam as a heat source. Amongst, a keyhole welding employing a plasma as the heat source has been employed in view of improvement of efficiency.

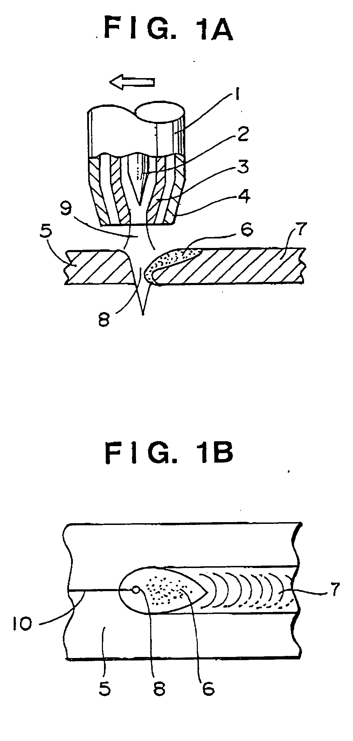

Fig. 1A is a longitudinal section showing a plasma keyhole welding process, and Fig. 1B is a plan view thereof. In a welding torch 1, a non-consumable electrode 2 is arranged at the center portion. About this non-consumable electrode 2, a plasma gas nozzle 3 and a shield gas nozzle 4 are arranged in coaxial fashion. By densing energy of an arc generated by the non-consumable electrode 2 by passing through the nozzle 3 and passing a plasma gas through the high temperature arc to form a plasma state, a plasma arc 9 is generated by ionization of the plasma gas. The plasma arc 9 is cooled by the shield gas injected from the shield gas nozzle 4 to be restricted spreading and protected from oxidation by the ambient air. The plasma arc 9 is a high energy heat source that locally heats a plate 5 to be welded as the base material to form a molten pool 6. On the other hand, by the plasma arc injected at high velocity, the molten metal is depressed to form a keyhole 8. By moving the plasma arc 9 along a groove 10 of the plate 5 to be welded, a plasma keyhole is advanced with melting the base material. Then, the molten metal is moved backwardly to fill the rear side keyhole. Therefore, the keyhole is constantly maintained at a fixed configuration. At the backside of the plasma arc 9 with respect to the moving direction, the molten pool 6 is formed and the molten metal is solidified to form a molten bead 7 at the further backside. The keyhole welding is a most particular high efficiency welding process of the plasma welding which can form a penetration bead as shown in Figs. 1A and 1B.

Conventionally, in the plasma keyhole welding, a pulse current having a peak current value and a base current value is supplied to the electrode. The peak current value, the base current value, frequency and so forth of the pulse current are adjusted for controlling plasma arc, as disclosed in Japanese Unexamined Patent Publication (Kokai) No. Showa 60-27473

However, this process encounters a problem in that rising period and falling period of respective pulse becomes instant upon control of the pulse current to possibly cause disturbance of the molten pool.

On the other hand, the molten pool 6 has a tendency to become wide at the side of the torch 1 to be so-called wine cup like configuration. Since the width portion of the molten pool is strongly influenced by the current, higher current tends to cause widening of the width of the molten pool rather than deepening the depth of the molten pool. Increasing of the width of the molten pool will not contribute for formation of the keyhole. In case of the upward welding, the widened molten pool possibly causes melting down of the molten pool. Therefore, in the practical plasma arc control method employing the current is not so effective in prevention melting down of the molten pool and in control for all position welding, for example.

In particular, in the plasma welding, the melting configuration tends to become the wine cup like configuration to have large bead width in the vicinity of the surface of the base material to cause increasing of the molten metal amount to increase tendency of drooping down or dropping down of the molten pool. This increases tendency of the phenomenon set forth above.

Namely, in case of the welding for entire circumference of the medium or large diameter horizontal stationary pipe, tank or so forth, the all position welding varying the positions from downward position to upward position across vertical position has to be performed from an initial layer to a final layer. Particularly, when the plasma keyhole welding is applied for the initial layer welding, drooping down of the molten pool is easily caused. Even if the drooping down of the molten pool can be successfully prevented, there is still remained a problem to easily cause projecting bead or penetration failure.

As set forth above, in the prior art, all position welding, in which the welding position is varied from the downward position to the upward position across the vertical position, should be performed over the initial layer to the final layer to make setting of the welding conditions complicate.

In case of welding of the stationary pipe, particularly the horizontal stationary pipe, the welding operation is typically performed by an upwardly advancing welding progressing welding from lower portion to the upper portion or the all position welding progressing welding from downward position to upward position across the vertical position and subsequently from the upward position to the downward position across the vertical position. In such case, when the initial layer is welded by arranging the welding torch at the outside of the pipe to perform welding with directing the torch toward external surface of the pipe to be welded, the penetration bead can become excessive at the portion near the upper portion of the pipe. Conversely, lack of penetration can be caused in the vicinity of the lower portion. Therefore, it is difficult to stably form a uniform bead. In such case, while the plasma arc welding can obtain deeper penetration depth in comparison with other welding processes and thus is efficient, difficulty is encountered in stabilizing the arc.

In the conventional plasma arc welding employing a pure argon gas as a plasma gas (center gas), the stability of the arc is insufficient in the case of circumferential welding of the stationary pipe. In addition, in the circumferential welding for the stationary pipe, the plasma arc welding tends to cause a blow hole at the bottom portion of the welding bead to cause difficulty in obtaining excellent welding portion. This is particularly remarkable in the case of non-keyhole welding, in which the keyhole is not formed.

In contrast to the keyhole welding, the non-keyhole welding (soft plasma welding) is employed in welding without forming the penetration bead. In such non-keyhole welding, the pure argon gas is typically used as the plasma gas. In such conventional plasma arc welding using the pure argon gas as the plasma gas, a plasma jet has a tendency to be captured in the molten pool to cause blow hole in the bottom of the bead. In the worst case, the plasma jet captured in the molten pool may form a tunnel like defect. Therefore, a difficulty is encountered in obtaining excellent welding portion. This phenomenon is remarkable in the case where the flow rate of the plasma gas is greater than or equal to 1.0 ℓ/min.

On the other hand, in view of the surface property of the base material, when the base material which is processed by machining or grinding to remove surface scale and cleaned, such as a steel plate, is welded by the plasma arc welding, relatively stable and less defective molten metal can be obtained. However, when the surface is not cleaned, for example, in the case where the scale is remaining, the arc can be disturbed by the effect of the iron oxide and easily forms the defects, such as the blow hole in the molten metal.

It is an object of the present invention to provide a plasma welding process which permits welding at high efficiency for the objective portion for welding where the welding position varies sequentially, without causing drooping down or dropping down of a molten pool or penetration failure, and can provide a welding portion with a deep penetration.

According to invention, a plasma welding process is provided, as defined by claim 1.

The present invention will be understood more fully from the detailed description given herebelow and from the accompanying drawings of the preferred embodiment of the present invention, which, however, should not be taken to be limitative to the invention, but are for explanation and understanding only.

In the drawings:
Figs. 1A and 1B are explanatory illustrations showing activity in a keyhole welding;
Fig. 3 is an illustration showing one example of a welding process in a circumferential welding of a stationary pipe;
Fig. 4 is an illustration explaining upper end, lower end, upper half and lower half of the stationary pipe;
Fig. 5 is an illustration showing another example of a welding process in a circumferential welding of a stationary pipe;
Figs. 6A and 6B are illustration explaining a manner of connection of bead in welding for the stationary pipe;
Fig. 7 is a section showing configuration of joint and manner of formation of layers in the sixth embodiment;
Fig. 8 is a section showing configuration of joint and manner of formation of layers in the seventh embodiment;
Fig. 9 is a section showing configuration of joint and manner of formation of layers in the eighth embodiment;
Fig. 10 is a section showing configuration of joint and manner of formation of layers in the ninth embodiment;
Fig. 11 is a section showing configuration of joint and manner of formation of layers in the tenth embodiment;
Fig. 12 is a section showing configuration of joint and manner of formation of layers in the eleventh embodiment;
Fig. 13 is a section showing configuration of joint and manner of formation of layers in the twelfth embodiment;
Fig. 14 is a section showing configuration of joint and manner of formation of layers in the thirteenth embodiment;

The present invention will be discussed hereinafter in detail with reference to the accompanying drawings.

The following process is recommended in performing circumferential welding for the stationary pipe. In particular, the following process is particularly suitable for medium to large diameter pipes.

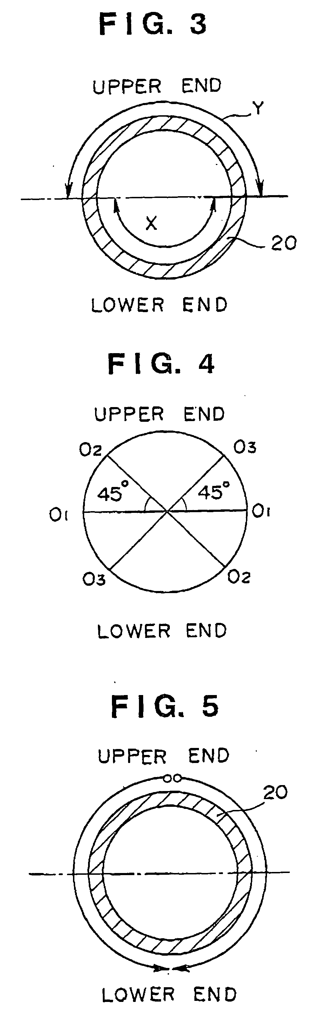

The first process is for welding of the initial layer of the stationary pipes mating at ends in horizontal or tilted attitude. As shown in Fig. 3, when welding is to be performed along a welding line extending circumferentially, the welding torch is deposed within the stationary pipe to perform welding with taking the internal surface of the stationary pipes as the surfaces for the lower half (region X). On the other hand, for the upper half (region Y), the welding torch is arranged outside of the stationary pipe to perform welding with taking the external surface of the pipe as the surface.

It should be noted that the upper half is a region including the upper end portion of the stationary pipe and the lower half is a region including the lower end portion of the stationary pipe. Accordingly, the boundary between the upper half and the lower half is not strictly limited at the center in the height, but can be at the position circumferentially shifted in the extent of 45° about the center of the stationary pipe, for example. As shown in Fig. 4, there are various ways for separating the upper half and the lower half, such as separating at line 01 - 01, line 02 - 02, line 03 - 03 and so forth. When the boundary is set at line 02 - 02 or 03 - 03 shifted from the center in the height, i.e. line 01 - 01, the preferred range of circumferential offset is up to 45° with respect to the horizontal line extending through the center of the stationary pipe. As shown in Fig. 3, the welding torch is arranged outside of the stationary pipe to perform welding with taking the external surface of the pipe as the surface for the upper half and the welding torch is deposed within the stationary pipe to perform welding with taking the internal surface of the stationary pipes as the surfaces for the lower half.

As set forth above, the position of the boundary between the upper half and the lower half is not specified to the exact center in the height of the stationary pipe, where the line extending through the intersecting points with the pipe wall and the center of the stationary pipe becomes the horizontal straight line with 180° of the center angle. The center angle of the line extending through the intersecting points with the pipe wall and the center of the stationary pipe can be differentiated from 180° depending upon the necessity.

When the welding can be completed by one pass of welding operation, welding may be performed either keyhole welding or non-keyhole welding. It is also possible to simultaneously perform welding at the external surface and internal surface of the stationary pipe. In case of the multi-layer welding, it is preferred to perform all position welding for the internal surface and/or the external surface of the stationary pipe over entire circumference of the joint.

As set forth above, by separating the stationary pipe into the lower half (region X) to perform welding at the internal surface and the upper half (region Y) to perform welding at the external surface, the most welding position becomes downward position substantially through entire welding line with vertical position only in the limited region. As can be clear herefrom, the shown process permits to avoid the upward position in welding to contribute for speeding up and enhancing of efficiency of the welding operation.

### Manner of Welding

The welding on the internal surface of the stationary pipe and the welding on the external surface of the stationary pipe can be performed at mutually different timing or simultaneously. When welding is performed simultaneously at the internal surface and the external surface of the stationary pipe by employing two welding torches. This may further improve efficiency of the welding operation.

The present invention is applicable for welding operation only initial layer, and for welding of the initial layer in the multi-layer welding. In case of the multi-layer welding, the welding operations for the second and subsequent layers may be performed by the all position welding.

Needless to say, the welding condition in the welding process set forth above can be arbitrary determined. In this case, it is preferred to set the welding condition with taking the following points into account.

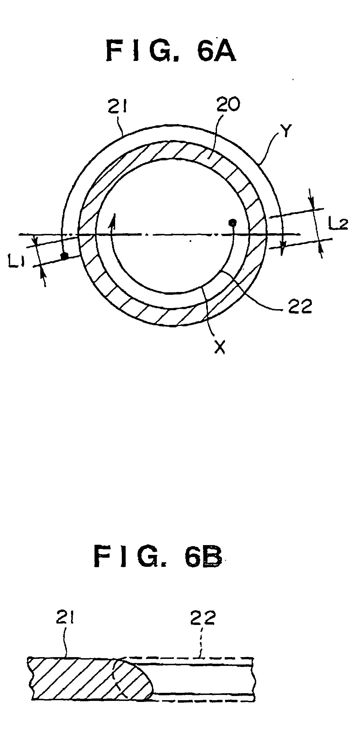

In the welding operation for the stationary pipe, lowering of efficiency is caused by the portion requiring the welding operation in the upward position. Therefore, it is desirable to minimize the portion requiring the upward position welding. Figs. 6A and 6B shows the process, in which the welding is performed externally for the upper half (region Y) to form a first bead 21, and welding is performed internally for the lower half (region X) to form a second bead 22. In this case, the first and second beads 21 and 22 are overlapped at a predetermined lengths L₁ and L₂ to avoid discontinuous portion to complete bead connection.

The overlapping length L may be insufficient if it is less than 5 mm, while the required overlapping length may be variable depending upon the diameter of the stationary pipe, pipe wall thickness, groove configuration and so forth. In such case, difficulty is encountered in forming uniform configuration of the bead and can cause defect, such as under-cut and so forth. Therefore, in order to attain stable bead overlapping, it is desirable to set the overlapping length greater than or equal to 5 mm.

The manner of bead connection as set forth above is applicable for second and subsequent passes after completion of the keyhole welding of the initial layer, and so the all position welding. However, in such case, it is preferred to form the overlapping portion at different angular position relative to the portion where the overlapping of the bead is formed in the preceding steps. This further ensures the welding operation.

Furthermore, even at the overlapping portion, it is desirable so as not to increase either of the welding current or the plasma gas flow rate beyond the welding condition for the welding portions other than the overlapping portion. When this condition is reversed, the welding bead at the overlapping portion becomes excessively high to cause difficulty in formation of the bead in the subsequent pass in case of the multi-layer welding. Furthermore, the excessively high bead at the overlapping portion may cause conformance failure. If necessary, it is possible to provide a lower welding speed or resting period in the overlapping portion.

On the other hand, it may be possible to improve efficiency of the welding operation by the automatic welding constantly performed from upper end to progress downwardly. This manner will significantly improve welding efficiency.

The efficiency of the welding, in particular the plasma keyhole welding, is significantly lowered by the welding operation in the vertical and upward progressing of welding.

Downwardly progressing welding through entire circumference, by always starting the welding operation from the upper end and terminating the welding operation at the lower end as shown in Fig. 5 improves efficiency of welding. In particular, this can avoid necessity of upwardly progressing welding at the vertical position in the plasma keyhole welding to significantly improve the efficiency of the welding operation.

Next, the preferred embodiments of the present invention will be discussed with comparison to comparative examples. As for these embodiments, filler wires were supplied except in the case of the first embodiment and for some examples and comparative examples in the fifth embodiment.

### First Embodiment

This embodiment is an example of all position welding from both of inner and outer sides of the stationary pipe after inial layer welding by way of plasma arc welding.

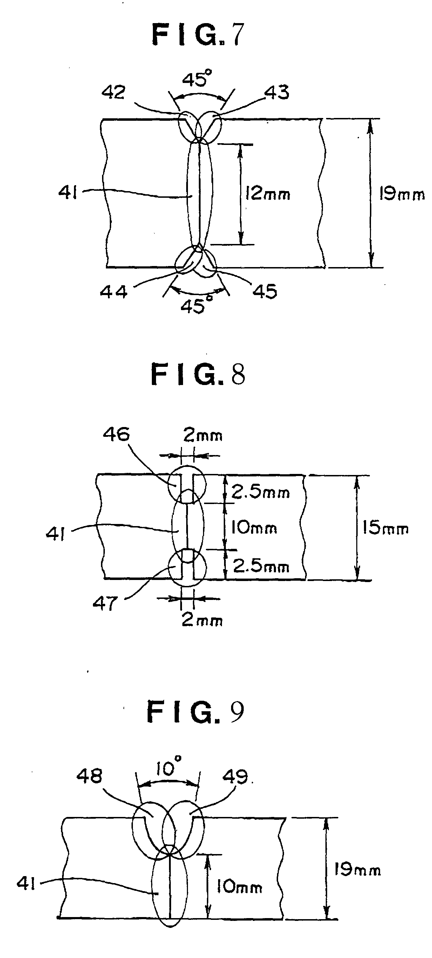

Initially, the initial layer welding was performed simultaneously on the inner periphery for the lower half of the stationary pipe and on the outer periphery for the upper half thereof for the groove at the joint of the stationary pipes as shown in Fig. 7. In Fig. 7, a bead 41 is the initial layer. Subsequently, the second and third layers are formed on both of the inner periphery and the outer periphery by way of non-keyhole welding. In the drawing, the reference numerals 42 and 43 denote external beads, and reference numerals 44 and 45 denote internal beads.

Here, the sample base material was API 5L-X60 steel (thickness 19 mm) of 20 inches of pipe diameter. The plasma arc welding conditions are shown in the following table 1.

**TABLE 1**

| Distinction | Welding Process | Current (A) | Voltage (V) | Speed (cm/min) | Plasma Gas | Shield Gas |
|---|---|---|---|---|---|---|
| 1st Pass | Keyhole | 320 | 38 | 20 | Argon | Argon (containing 4 ~ 7% of Hydrogen) |
| 2nd and 3rd Pass | Non-keyhole | 220 | 30 | 30 | Argon | " |

### Second Embodiment

This embodiment shows an example of all position welding at both of the inner and outer peripheries of the stationary pipe after initial layer welding by the laser welding.

Initially, the initial layer welding was performed simultaneously on the inner periphery for the lower half of the stationary pipe and on the outer periphery for the upper half thereof for the groove at the joint of the stationary pipes as shown in Fig. 8. In Fig. 8, a bead 41 is the initial layer. Subsequently, the second and third layers are formed on both of the inner periphery and the outer periphery by way of non-keyhole welding. In the drawing, the reference numeral 46 denotes external beads, and reference numeral 47 denotes internal beads.

Here, the sample base material was API 5L-X60 steel (thickness 15 mm) of 20 inches of pipe diameter. The laser arc welding conditions are shown in the following table 2.

**TABLE 2**

| Distinction | Output (kW) | Speed (cm/min) | Shield Gas | Assist gas |
|---|---|---|---|---|
| 1st Pass | 10 | 60 | helium | helium |
| 2nd and 3rd Pass | 5 | 60 | helium | helium |

### Third Embodiment

This embodiment shows an example of all position welding at the outer peripheries of the stationary pipe after initial layer welding by the plasma welding.

Initially, the initial layer welding was performed simultaneously on the inner periphery for the lower half of the stationary pipe and on the outer periphery for the upper half thereof for the groove (Y groove having opening at external side) at the joint of the stationary pipes as shown in Fig. 9. In Fig. 9, a bead 41 is the initial layer. Subsequently, the second and third layers are formed on both of the inner periphery and the outer periphery by way of non-keyhole welding. In the drawing, the reference numerals 47 and 48 denote external beads.

Here, the sample base material was API 5L-X60 steel (thickness 19 mm) of 20 inches of pipe diameter. The plasma arc welding conditions are shown in the following table 3.

**TABLE 3**

| Distinction | Welding Process | Current (A) | Voltage (V) | Speed (cm/min) | Plasma Gas | Shield Gas |
|---|---|---|---|---|---|---|
| 1st Pass | Keyhole | 320 ~ 340 | 32 ~ 34 | 18 | Argon | Argon + Hydrogen |
| 2nd and 3rd Pass | Non-keyhole | 260 ~ 280 | 30 ~ 32 | 22 | Argon | " |

### Fourth Embodiment

This embodiment shows an example of all position welding at the inner peripheries of the stationary pipe after initial layer welding by the laser welding.

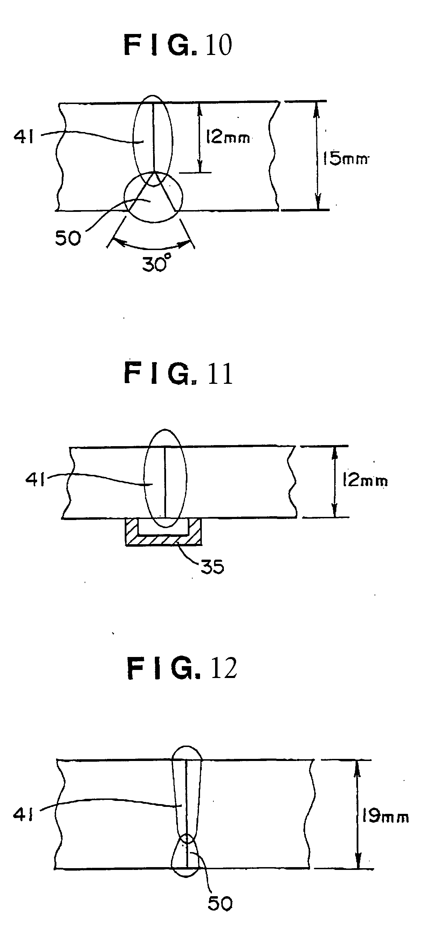

Initially, the initial layer welding was performed simultaneously on the inner periphery for the lower half of the stationary pipe and on the outer periphery for the upper half thereof for the groove (Y groove having opening at internal side) at the joint of the stationary pipes as shown in Fig. 10. In Fig. 10, a bead 41 is the initial layer.

Subsequently, the second and third layers are formed on both of the inner periphery and the outer periphery by way of non-keyhole welding. In the drawing, the reference numeral 50 denotes internal beads.

Here, the sample base material was API 5L-X60 steel (thickness 19 mm) of 30 inches of pipe diameter. The plasma arc welding conditions are shown in the following table 4.

**TABLE 4**

| Distinction | Welding Process | Current (A) | Voltage (V) | Speed (cm/min) | Plasma Gas | Shield Gas |
|---|---|---|---|---|---|---|
| 1st Pass | Keyhole | 300 ~ 320 | 32 ~ 35 | 18 | Argon | Argon + Hydrogen |
| 2nd and 3rd Pass | Non-keyhole | 280 ~ 300 | 30 | 22 | Argon | " |

### Fifth Example

This embodiment is an example, in which welding of the stationary pipe is completed only by the initial layer welding by way of the plasma arc welding process.

Initially, the initial layer welding was performed simultaneously on the inner periphery for the lower half of the stationary pipe and on the outer periphery for the upper half thereof with employing the backing material (of Cu or ceramics) for the groove (I groove) at the joint of the stationary pipes as shown in Fig. 11. In Fig. 11, a bead 41 is the initial layer.

Here, the sample base material was API 5L-X60 steel (thickness 12 mm) of 20 inches of pipe diameter. The plasma arc welding conditions are shown in the following table 5. Since breakage tends to be caused when the amount of hydrogen is excessive, hydrogen is not used as the shield gas.

**TABLE 5**

| Distinction | Welding Process | Current (A) | Voltage (V) | Speed (cm/min) | Plasma Gas | Shield Gas |
|---|---|---|---|---|---|---|
| 1st Pass | Keyhole | 300 ~ 320 | 33 ~ 34 | 14 | Argon | Argon + CO₂ |

### Sixth Embodiment

This embodiment shows an example of all position welding at the inner peripheries of the stationary pipe after initial layer welding by the laser welding.

Initially, the initial layer welding was performed simultaneously on the inner periphery for the lower half of the stationary pipe and on the outer periphery for the upper half thereof for the groove (I groove) at the joint of the stationary pipes as shown in Fig. 12. In Fig. 12, a bead 41 is the initial layer. Subsequently, the second layer are formed on both of the inner periphery and the outer periphery by way of non-keyhole welding. In the drawing, the reference numeral 50 denotes internal beads.

Here, the sample base material was API 5L-X60 steel (thickness 19 mm) of 30 inches of pipe diameter. The plasma arc welding conditions are shown in the following table 6.

**TABLE 6**

| Distinction | Welding Process | Current (A) | Voltage (V) | Speed (cm/min) | Plasma Gas | Shield Gas |
|---|---|---|---|---|---|---|
| 1st Pass | Non-Keyhole | 280 ~ 320 | 30 ~ 33 | 16 ~ 18 | Argon | Argon + Hydrogen |
| 2nd Pass | Non-keyhole | 240 ~ 270 | 29 ~ 32 | 18 ~ 20 | Argon | " |

### Seventh Example

This embodiment is an example, in which welding of the stationary pipe is completed only by the initial layer welding by way of the plasma arc welding process. This embodiment is suitable for welding pipes having relatively thin wall for a pipe line.

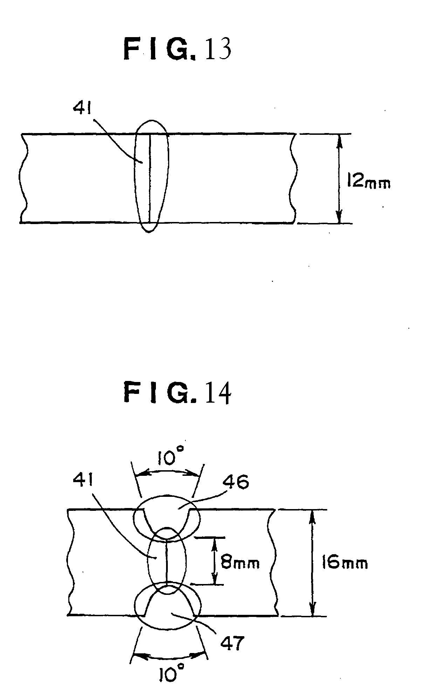

Initially, the initial layer welding was performed simultaneously on the inner periphery for the lower half of the stationary pipe and on the outer periphery for the upper half thereof without employing the backing material for the groove (I groove) at the joint of the stationary pipes as shown in Fig. 13. In Fig. 13, a bead 41 is the initial layer.

Here, the sample base material was API 5L-X60 steel (thickness 10 mm) of 20 inches of pipe diameter. The plasma arc welding conditions are shown in the following table 7.

**TABLE 7**

| Distinction | Welding Process | Current (A) | Voltage (V) | Speed (cm/min) | Plasma Gas | Shield Gas |
|---|---|---|---|---|---|---|
| 1st Pass | Keyhole | Pulse of 200/280 | 33 - 38 | 10 | Argon | Argon + Hydrogen |

In each embodiment, stable welding can be performed. Also, no defect was found.

## Claims

1. A plasma welding process for an initial layer welding in circumferential direction for stationary pipes (20) mating in alignment in horizontal or tilted orientation through a process, in which a voltage is applied between an electrode and an object for welding with injecting a plasma gas to generate a plasma, and welding is performed with taking the plasma as a heat source, **characterized by** comprising the step of :
performing welding on the internal surface of the lower half of said stationary pipes, said lower half being a region including the lower end portion of the stationary pipes, and
performing welding on the external surface of the upper half of said stationary pipes, said upper half being a region including the upper end portion of the stationary pipes, and the circumferential offset of the boundary separating the upper half and the lower half being up to 45° with respect to the horizontal line extending through the center of the stationary pipes.

2. A plasma welding process as set forth in claim 1, **characterized in that** welding on the internal periphery and welding on the external periphery are performed simultaneously.

3. A plasma welding process as set forth in claim 1 or 2, **characterized in that** all position welding is performed on internal and/or external surfaces of said stationary pipes on the entire circumference after said initial layer welding.

4. A plasma welding process as set forth in one of claims 1 to 3, **characterized in that** an overlapping portion (L1, L2) is provided between a first bead formed by welding for the upper half of said stationary pipe and a second bead formed by welding for the lower half of said stationary welding.

5. A plasma welding process as set forth in claim 4, **characterized in that** said overlapping portion (L1, L2) has a length of 5 mm or more.

6. A plasma welding process as set forth in claim 4 or 5, **characterized in that** a welding current and/or plasma flow rate at said overlapping portion (L1, L2) are maintained lower than those at other portion.

## Patentansprüche

1. Plasmaschneidverfahren zum Schweißen einer initialen bzw. Anfangsschicht in Umfangsrichtung für stationäre Leitungen bzw. Rohre (20), und zwar passend bzw, gepaßt in horizontaler oder verdrehten Ausrichtung, durch ein Verfahren, in welchem eine Spannung zwischen einer Elektrode und einem Objekt angelegt ist zum Schweißen mit Injizieren bzw. Einspritzen eines Plasmagases, um ein Plasma zu erzeugen, und das Schweißen durchgeführt wird mit dem Plasma als eine Wärmequelle, **gekennzeichnet durch** den Schritt:
Durchführen von Schweißen an einer inneren Oberfläche bzw. Fläche der unteren Hälfte der stationären Leitungen, wobei die untere Hälfte eine Region bzw. ein Bereich ist, der bzw. die den unteren Endabschnitt der stationären Leitungen umfaßt, und
Durchführen von Schweißen an einer extemen Oberfläche bzw. Fläche der oberen Hälfte der stationären Leitungen, wobei die obere Hälfte eine Region bzw. ein Bereich ist, der bzw. die den oberen Endabschnitt der stationären Leitungen umfaßt, wobei der umfängliche Versatz bzw. Kröpfung bzw. Abknickung der Grenze bzw. des Randes, der die obere Hälfte und die untere Hälfte trennt, bis zu 45° bezüglich der horizontalen Linie beträgt, die sich **durch** die Mitte der stationären Leitungen erstreckt.

2. Plasmaschweißverfahren gemäß Anspruch 1, **dadurch gekennzeichnet, daß** das Schweißen an der inneren Peripherie und das Schweißen an der äußeren Peripherie gleichzeitig durchgeführt werden.

3. Plasmaschweißverfahren gemäß Anspruch 1 oder 2, **dadurch gekennzeichnet, daß** Allpositionsschweißen bzw. Schweißen in allen Positionen bzw. Lagen durchgeführt wird in inneren und/oder äußeren Flächen bzw. Oberflächen der stationären Leitungen an dem gesamten Umfang nach dem Anfangslageschweißen.

4. Plasmaschweißverfahren gemäß einem der Ansprüche 1 bis 3, dadurch gekenzeichnet, daß ein überlappender Abschnitt (L1, L2) vorgesehen ist zwischen einer ersten Schweißraupe bzw, Wulst, die bzw. der durch Schweißen der oberen Hälfte der stationären Leitung gebildet ist, und einer zweiten Schweißraupe bzw. Wulst, die bzw. der durch Schweißen der unteren Hälfte der stationären Leitung gebildet ist.

5. Plasmaschweißverfahren gemäß Anspruch 4, **dadurch gekennzeichnet, daß** der überlappende Bereich (L1, L2) eine Länge von 5 mm oder mehr aufweist.

6. Plasmaschweißverfahren gemäß Anspruch 4 oder 5, **dadurch gekennzeichnet, daß** ein Schweißstrom und/oder eine Plasmaflußrate bzw. - geschwindigkeit bei dem überlappenden Bereichen (L1, L2) niedriger gehalten sind als jene in einem anderen Abschnitt.

## Revendications

1. Procédé de soudage au plasma pour un soudage en couche initiale dans une direction circonférentielle pour des tuyaux stationnaires (20) jointifs en alignement dans une orientation horizontale ou inclinée par l'intermédiaire d'un procédé, dans lequel une tension est appliquée entre une électrode et un objet destiné au soudage en injectant un gaz de plasma afin d'engendrer un plasma, et le soudage est réalisé en prenant le plasma comme source de chaleur, **caractérisé en ce qu'**il comprend les étapes consistant :
à réaliser le soudage sur la surface interne de la moitié inférieure desdits tuyaux stationnaires, ladite moitié inférieure étant une région incluant la partie d'extrémité inférieure des tuyaux stationnaires, et
à réaliser le soudage sur la surface externe de la moitié supérieure desdits tuyaux stationnaires, ladite moitié supérieure étant une région incluant la partie d'extrémité supérieure des tuyaux stationnaires, et le décalage circonférentiel de la frontière séparant la moitié supérieure et la moitié inférieure étant à 45° par rapport à la ligne horizontale s'étendant à travers le centre des tuyaux stationnaires.

2. Procédé de soudage au plasma selon la revendication 1, **caractérisé en ce que** le soudage sur la périphérie interne et le soudage sur la périphérie externe sont réalisés simultanément.

3. Procédé de soudage au plasma selon la revendication 1 ou 2, **caractérisé en ce que** l'ensemble des positions de soudage est réalisé sur les surfaces internes et/ou externes desdits tuyaux stationnaires sur toute la circonférence après ledit soudage en couche initiale.

4. Procédé de soudage au plasma selon l'une quelconque des revendications 1 à 3, **caractérisé en ce qu'**une partie chevauchante (L1, L2) est prévue entre une première perle formée par soudage pour la moitié supérieure dudit tuyau stationnaire et une seconde perle formée par soudage pour la moitié inférieure dudit tuyau stationnaire.

5. Procédé de soudage au plasma selon la revendication 4, **caractérisé en ce que** ladite partie chevauchante (L1, L2) possède une longueur de 5 mm ou plus.

6. Procédé de soudage au plasma selon la revendication 4 ou 5, **caractérisé en ce qu'**un courant de soudage et/ou un débit de plasma au niveau de ladite partie chevauchante (L1, L2) sont maintenus inférieurs à ceux au niveau de l'autre partie.
